# EUROPÄISCHE PATENTANMELDUNG

(11) **EP 1 930 148 A1**
(43) Veröffentlichungstag der Anmeldung: **11.06.2008**
(21) Anmeldenummer: 06125550.1
(22) Anmeldetag: 07.12.2006
(51) Int. Cl.: B29C 65/08

(54) **Verwendung einer Vorrichtung zum torsionalen Ultraschallschweissen**

(71) Anmelder: Telsonic Holding AG, 9552 Bronschhofen (CH)
(72) Erfinder: Lang, Georg, 97855 Tiefenstein (DE)
(74) Vertreter: Hepp, Dieter

(57) **Zusammenfassung**

Verwendung einer Vorrichtung zum torsionalen Ultraschallschweissen zum Verbinden von Teilen (3,3'), von denen mindestens ein Teil ganz oder Teilweise aus Kunststoff besteht. Die Vorrichtung wird auch dazu verwendet, um Teile zu verbinden, von denen mindestens ein Teil einen stossempfindlichen Bestandteil enthält oder wenigstens ein Teil einem stossempfindlichen Bestandteil zugeordnet ist.

## Beschreibung

Die Erfindung betrifft die Verwendung einer Vorrichtung zum torsionalen Ultraschallschweissen zum Verschweissen von Kunststoffteilen und Teilen mit stossempfindlichen Bestandteilen sowie ein Verfahren zum Verschweissen von Kunststoffteilen und stossempfindlichen Teilen sowie eine Vorrichtung zum torsionalen Ultraschallschweissen mit den Merkmalen der unabhängigen Ansprüche.

Es ist bekannt, dass Ultraschall eine Reihe von mechanischen, chemischen und biologischen Wirkungen auslöst. Die EP 0962261 A1 beschreibt beispielsweise eine Vorrichtung zum Behandeln von Fluiden mit einer Torsionssonotrode, welche durch einen Ultraschallschwingungserzeuger in Schwingungen versetzbar ist. Auch sind Anlagen zum Ultraschall-Schweissen von Metallen mit torsionaler Anregung oder Torsionssonotroden bekannt. Eines solche Vorrichtung wird beispielsweise im Buch von Wilhelm Lehfeld: Ultraschall / ISBN 3-8023-0060-2, S. 91 erwähnt.

Die DE 3342619 A1 beschreibt ein Verfahren zum Ultraschallschweissen von thermoplastischen Kunststoffen, insbesondere zum Schweissen von Automobil-Stossstangen mit einer longitudinal schwingenden Sonotrode.

Das herkömmliche Ultraschall-Schweissen mit in Richtung gegen das Werkstück gerichtete Schwingungen hat aber gewisse Nachteile: Empfindliche Strukturen und Bauteile können durch die Schwingungen geschädigt oder zerstört werden. Es besteht ein grosses Risiko, dass benachbarte bereits geschweisste Verbindungsstellen oder dünne Verbindungsstege und Zapfen durch das Ultraschallschweissen Schaden nehmen. Besonders problematisch erweist sich das herkömmliche Ultraschallschweissen, d.h. mit einer in longitudinaler Richtung schwingenden Sonotrode, für das Verschweissen von Gehäusen oder Teilen, welche empfindliche Elektronik aufnehmen sollen. Beispielsweise zerstört die für das dichte Verschweissen von Polyamidkunststoffgehäusen notwendige Amplitude mit hoher Wahrscheinlichkeit die Elektronik. Deshalb wird das Ultraschallscheissen von Teilen mit empfindlicher Elektronik und Mechanik von Fachleuten abgelehnt. Da eine Nachkontrolle der empfindlichen Elektronik im verschweissten Gehäuse in der Regel nicht möglich ist und gewisse Sekundärbeschädigungen an der Elektronik sich erst nach Jahren bemerkbar machen können, wird beim Verbinden von Teilen mit empfindlichem Inhalt wie beispielsweise Sensoren für die Automobiltechnik auf alternative Schweiss- oder Klebeverfahren zurückgegriffen. Beispielsweise werden empfindliche Teil mittels Laser- oder Reibschweissen verbunden. Diese Verfahren haben aber den Nachteil, dass der Schweissvorgang lange dauert und/oder die zu verbindenden Teile grossen thermischen Belastungen ausgesetzt sind. Das Laserschweissen ist zudem für glasfaserverstärkte Kunststoffe wegen des auftretenden Streulichts ungeeignet. Laserschweissen von zwei Kunststoffteilen ist ausserdem beschränkt auf Teile, von denen eines lasertransparent und das andere laserabsorbierend ist. Es hat sich gezeigt, dass Klebeverbindungen bei Kunststoffgehäusen von Sensoren den Belastungen von Klimawechseltests nicht gewachsen sind und die Gehäuse mit der empfindlichen Elektronik undicht werden.

Ein weiterer Nachteil besteht auch beim Schweissen von sehr dünnwandigen Teilen wie Folien oder Membranen. Die longitudinalen Ultraschallwellen haben die Tendenz, die empfindlichen Membranen zu zerreissen so dass in der Mitte ein Loch entsteht (Membraneffekt). Thermische Verfahren sind für dünnwandige Teile ebenso kritisch, weil die hohen Temperaturen die Teile beschädigen können.

Es ist deshalb eine Aufgabe der vorliegenden Erfindung, die Nachteile des Bekannten zu vermeiden, insbesondere ein Verfahren und eine Vorrichtung der eingangs genannten Art zu schaffen, welche insbesondere auf schonende und einfache Art und Weise zwei Teile, insbesondere mit einem empfindlichen Bestandteil oder Inhalt verbinden können und keinen grossen zeitlichen Aufwand benötigen. Zudem soll das Verbinden möglichst kostengünstig erfolgen können.

Erfindungsgemäss werden diese Aufgaben mit der Verwendung einer Vorrichtung zum torsionalen Ultraschall-Schweissen, einem Verfahren und einer Vorrichtung gemäss den Merkmalen unabhängigen Ansprüche gelöst.

Als vorteilhaft für die Erfindung hat sich Ultraschall im Frequenzbereich von ungefähr 15 kHz bis 100 kHz, besonders bevorzugt 20 kHz bis 30 kHz erwiesen.

Zum Verbinden von Teilen, von denen mindestens ein Teil ganz oder teilweise aus Kunststoff besteht, wird erfindungsgemäss eine Vorrichtung zum torsionalen Ultraschallschweissen verwendet. Unter torsional wird hier eine Schwingung einer Sonotrode um ihre Längsachse verstanden, das heisst die Sonotrode führt eine torsionale Bewegung um eine Torsionachse aus, welche im wesentlichen senkrecht auf der Ebene der zu bildenden Schweissnaht steht. Die Torsionsachse liegt somit im wesentlichen parallel zu Kraftachse, mit welcher die Sonotrode auf das Teil gedrückt wird.

Der Vorteil liegt darin, dass mit dieser Anordnung dank des Einsatzes von Ultraschallschwingungen eine thermische Belastung der Teile verhindert wird und die Schweisszeit gegenüber herkömmlichen Verfahren kurz ist. Völlig überraschend für den Fachmann hat sich gezeigt, dass das torsionale Ultraschallschweissen für die Verbindung von Kunststoffteilen gut geeignet ist und die Nachteile der bisher verwendeten Vorrichtungen beseitigt.

Ein weiterer Aspekt der Erfindung besteht in der Verwendung einer Vorrichtung zum torsionalen Ultraschallschweissen zum Verbinden von Teilen, von denen wenigstens ein Teil, insbesondere gegenüber Longitudinalstössen, stossempfindliches Teil als Bestandteil enthält oder wenigstens ein Teil einem stossempfindlichen Bestandteil zugeordnet ist. Als Longitudinalstoss ist hier ein Impuls zu verstehen, welcher insbesondere in Richtung der Torsionsachse auf das Teil wirkt. Solche Stösse treten z.B. beim longitudinalen/linearen Ultraschallschweissen auf.

Eines der zu verbindenden Teile kann also selbst mindestens teilweise stossempfindlich sein oder ein Teil ist einem stossempfindlichen Teil zugeordnet, indem es dieses beispielsweise umschliesst oder an dieses gekoppelt ist. Denkbar ist auch, dass der empfindliche Bestandteil erst durch das Verbinden der beiden Teile in Wechselwirkung mit den Teilen tritt und dadurch beim Verbinden beschädigt werden könnte. Entgegen der herrschenden Meinung unter Fachleuten, dass Ultraschallschweissen unter keinen Umständen für das Schweissen von empfindlichen Teilen, insbesondere Elektronikbauteilen, verwendet werden darf, erweist sich das torsionale Ultraschallschweissen für diese Zwecke als besonders vorteilhaft. Insbesondere treten dabei höchstens unbedeutende linearen Schwingungen auf. Ein weiterer Vorteil liegt in den vergleichsweise geringen Investitionen einer solchen Vorrichtung gegenüber herkömmlichen Vorrichtungen. Die fehlende thermische Belastung der zu verschweissenden Teile erweist sich als weiterer Vorteil. Mit der Verwendung der torsionalen Ultraschweissvorrichtung sind zudem nur einfache Schweissbewegungen notwendig, welche zudem schnell ausgeführt werden können. Dadurch kann die Vorrichtung vorteilhaft in eine automatische Produktionslinie eingefügt und verwendet werden.

Bevorzugt wird die Vorrichtung zum Verbinden von Teilen mit einem der folgenden empfindlichen Bestandteile verwendet: ein elektronisches Bauteil wie z.B. integrierte Schaltkreise; ein Gas; ein Fluid; eine feinmechanische Komponente; eine chemische Verbindung, insbesondere Explosionsstoffe; ein Substrat für Leiterbahnen; eine behandelte Oberfläche, bevorzugt Lacke, Metallisierungen oder Beschichtungen; ein dünnwandiges Kunststoffelement, bevorzugt eine Folie, eine Membran; dünne Nietungen; harte und zerbrechliche Stoffe, wie beispielsweise Glas oder Silizium.

Selbstverständlich sind auch andere empfindliche Stoffe denkbar. Der Vorteil liegt in der schonenden Behandlung der empfindlichen Bestandteile beim Verschweissen durch das fehlen von Longitudinalstössen. Dadurch wird verhindert, dass Leiterbahnen, Lötfahnen oder andere elektronische Teile sich von einer Platine lösen können oder die elektronischen Bauteile wie Widerstände, Transistoren oder integriere Schaltungen etc. selbst beschädigt werden. Auch feinmechanische Komponenten wie z.B. Federn, Zahnräder und Wellen werden vor mechanischen Beschädigungen wie Verbiegen, Verkanten , Verrutschen aus ihrer Solllage oder vor unbeabsichtigtem Verschweissen (wenn sie aus Kunststoff sind) geschützt.

Behandelte Oberflächen können besonders empfindlich sein: lackierte, metallisierte oder anders beschichtete Oberflächen wie z.B. verchromte Kunststoffarmaturen sind besonders anfällig gegenüber longitudinalen Stössen. Es besteht die Gefahr, dass die Beschichtung bzw. Metallisierung sich vom Trägermaterial löst. Das torsionale Ultraschallschweissen erweist sich hier als besonders vorteilhaft, da ein Abblättern der Beschichtung verhindert werden kann. Vorteilhaft ist das Torsionsultraschallschweissen auch für Teile mit empfindlichen Oberflächen wie beispielsweise genarbte Oberflächen auf der gegenüberliegenden Seite der Schweissung, d.h. der Ambossseite. Herkömmliche Ultraschallschweissvorrichtungen hinterlassen auf solchen Oberflächen unerwünschte Abdrücke auf der Ambossseite.

Dünne Teile wie Folien oder Membranen aus Kunststoff oder Metall sind besonders empfindlich gegenüber longitudinalem Ultraschallschweissen, da die dünnen Schichten durch die Amplituden oder thermische Belastung leicht zerstört werden (so genannter Membraneffekt). Durch das torsionale Ultraschallschweissen wird die Membrane/Folie nur unter ihrer Schweisszone beansprucht. Ein weiterer Vorteil besteht darin, dass die Folien mit torsionalem Ultraschall mit einer höheren Festigkeit verschweisst werden können gegenüber herkömmlichen Schweissverfahren.

Bevorzugt bilden die Teile nach dem Verschweissen ein wenigstens teilweise geschlossenes Gehäuse aus Kunststoff, z.B. aus Polyamid (PA). Der Vorteil der erfindungsgemässen Verwendung liegt darin, dass infolge geschlossener Oberfläche eine optische Kontrolle des Inhalts nicht möglich ist. Der Anwender hat jedoch Gewissheit, dass keine Beschädigungen durch eine mechanische oder thermische Belastung der empfindlichen Teile auftreten können. Gleichzeitig ergibt sich jedoch eine dauerhafte und dichte Schweissverbindung.

Bevorzugt ist der empfindliche elektronische Bauteil ein Sensor. Beispielsweise handelt es sich um einen Sensor für den Einbau in einem Fahrzeug wie beispielsweise einen Nockenwellensensor oder einen Klopfsensor. Dieser ist in Betrieb hohen thermischen und mechanischen Belastungen ausgesetzt. Zudem müssen die Sensorgehäuse absolut wasserdicht sein. Der Sensor wird deshalb vorteilhaft in einem Kunststoffgehäuse mittels einer torsionalen Ultraschall-Schweissvorrichtung verschweisst.

Besonders vorteilhaft erweist sich die Verwendung der Vorrichtung zum torsionalen Ultraschallschweissen zur Bildung einer nicht rotationssymmetrischen Verbindung zwischen den beiden Teilen. Die zu verschweissenden Teile müssen also nicht rotationssymmetrisch sein. Es sind beliebige Formen denkbar. Beispielsweise kann ein rechteckiger Deckel auf ein rechteckiges Gehäuse geschweisst werden, wobei eine rechteckige Schweissverbindung entsteht. Dies ermöglicht eine grösstmögliche Flexibilität gegenüber der Teile-Geometrie.

Die Vorrichtung zum torsionalen Ultraschallschweissen kann alternativ auch zum Vernieten von wenigstens zwei Teilen verwendet werden. Mindestens ein Teil weist einen Formteilzapfen auf, welcher durch die Ultraschallschwingungen zu einem Nietkopf umgeformt wird. Dies hat den Vorteil, dass einerseits sehr dünne Nietstege verwendet werden können. Zudem können auch gegenüber longitudinalen Schwingungen empfindliche Teile vernietet werden. Auch können mehrere Nietungen mit nur einer Sonotrode gleichzeitig ausgeführt werden.

Ein weiterer Aspekt der Verwendung einer Vorrichtung zum torsionalen Ultraschallschweissen umfasst das Ausstanzen einer Folie, insbesondere aus Kunststoff. Durch die torsionale Schwingungen bleibt die Folie unversehrt, der bei herkömmlichen Ultraschallschweissvorrichtungen auftretende Membraneffekt, welcher zur Zerstörung der Folie führt, bleibt aus.

Ein weiterer Aspekt der Erfindung umfasst ein Verfahren zum Verbinden eines ersten Teils mit wenigstens einem zweiten Teil, wobei wenigstens eines der Teile ganz oder teilweise aus Kunststoff besteht. Zum Verbinden wird das erste Teil mit torsionalen Ultraschallschwingungen beaufschlagt. Dieses Verfahren ist besonders vorteilhaft, da die mechanische und thermische Belastung gegenüber longitudinal, d.h. in einer Ebene senkrecht zur Ebene der Schweissnaht, angeregten Teilen viel kleiner ist.

Ein anderer Aspekt betrifft ein Verfahren zum Verbinden von Teilen, von denen wenigstens ein Teil einen stossempfindlichen Bestandteil enthält oder wenigstens ein Teil einem stossempfindlichen Bestandteil zugeordnet ist. Dazu wird ein Teil mit Ultraschallschwingungen beaufschlagt. Zugeordnet bedeutet, dass der empfindliche Bestandteil nicht unbedingt mit dem zu verschweissenden Teil verbunden sein muss, sondern das ein Teil derart mit dem empfindlichen Bestandteil in Beziehung steht, dass der Schweissvorgang sich auf den Bestandteil auswirken kann. Die Zuordnung kann beispielsweise darin bestehen, dass ein Teil einen empfindlichen Inhalt umschliesst, beispielsweise auch erst nach dem Verschweissen, oder dass ein Teil auf einem empfindlichen Bestandteil aufliegt oder daran befestigt ist.

Das empfindliche Bestandteil umfasst bevorzugt ein elektronisches Bauteil, ein Gas, ein Fluid, eine feinmechanische Komponente, eine chemische Verbindung, insbesondere Explosionsstoffe, ein Substrat für Leiterbahnen, behandelte Oberflächen, bevorzugt Lacke, Metallisierung oder Beschichtungen ein dünnwandiges Kunststoffelement, bevorzugt eine Folie oder eine Membran, dünne Nietungen oder harte und zerbrechliche Stoffe wie Glas oder Silizium.

Besonders bevorzugt werden Teile verschweisst, die nach dem Verbinden ein wenigstens teilweise geschlossenes Gehäuse aus Kunststoff bilden. Bevorzugt sind die verwendeten Gehäuseteile aus Polyamid (PA). Der Vorteil dieses Verfahrens liegt darin, dass empfindliche Bestandteile in einem Gehäuse hermetisch verschlossen werden können.

In vorteilhafter Weise wird als empfindliches elektronisches Bauteil ein Sensor für den Einbau in einem Fahrzeug verwendet.

Es können bevorzugt auch nicht rotationssymmetrische Teile miteinander verbunden werden. Somit sind grundsätzlich beliebige Formen miteinander verschweissbar.

Ein weiterer Aspekt betrifft ein Verfahren zur Vernietung eines ersten Formteils umfassend mindestens einen Formteilzapfen, insbesondere aus Kunststoff, und eines zweiten Formteils, insbesondere aus Kunststoff. Dazu wird der Formteilzapfen derart mit torsionalen Ultraschallschwingungen beaufschlagt, dass eine Verformung des Formteilzapfens zu einem Nietkopf entsteht und die beiden Formteile verbunden werden. Der Vorteil liegt darin, dass dadurch auch Teile mit empfindlichen Oberflächen und/oder besonders filigrane Formteilzapfen vernietet werden können.

Es hat sich überraschend gezeigt, dass anders als beim herkömmlichen longitudinalen Ultraschallschweissen von Kunststoff, bei welchem beide zu verschweissende Kunststoffteile mitschwingen müssen, um eine Schweissnaht zu bilden, beim torsionalen Ultraschallschweissen das zu verschweissende Teil mit möglichst geringem Spiel in einer Formteilaufnahme gehalten werden soll. Im Gegensatz dazu sollte das Teil im Amboss beim bekannten Ultraschallschweissen mit Spiel in der Formteilaufnahme gelagert sein. Bevorzugt wird das zu verbindende Teil bzw. Formteil, welches nicht direkt mit Schwingungen beaufschlagt wird, relativ gegenüber der Schwingungsrichtung der Sonotrode in einer Formteilaufnahme fixiert oder festgeklemmt. Dadurch wird verhindert, dass es in torsionale Bewegungen gerät. Bevorzugt greift die Formteilaufnahme unmittelbar bei der Schweissnaht an. Die Formteilaufnahme ist bevorzugt derart ausgebildet, dass die torsionale Bewegung nicht auf das nicht direkt mit Schwingungen beaufschlagte Teil übertragen wird. Beispielsweise wird bei nicht rotationssymmetrischen Teilen bevorzugt eine harte Gussform, beispielsweise aus Epoxidharz als Formteilaufnahme erstellt, in der das zu verschweissende Teil teilweise eingegossen wird. Besonders geeignet ist auch eine in Metall gefräste Formteilaufnahme. Bevorzugt ist die Masse und Festigkeit der Formteilaufnahme derart hoch, dass ein Mitschwingen der Formteilaufnahme und des darin eingespannten Teils verhindert wird. Als vorteilhaft erweist sich auch eine aufgeraute Oberfläche der Formteilaufnahme, so dass sich eine grosse Reibung zwischen Formteilaufnahme und eingespanntem Formteil ergibt.

Ein weiterer Aspekt der Erfindung umfasst eine Vorrichtung zum torsionalen Ultraschallschweissen mit einem Generator, wenigstens einem Konverter und einen Torsionsschwinger zum Beaufschlagen einer Sonotrode mit Torsionsschwingungen und einer Formteilaufnahme zur Aufnahme eines Formteils. Die Formteilaufnahme ist derart ausgebildet, dass ein Formteil relativ zu den Bewegungsrichtungen der Sonotrode torsional und longitudinal in der Formteilaufnahme nahezu spielfrei fixierbar ist, während das andere Formteil, welches mit Schwingungen beaufschlagt wird, die Schwingungen mitmachen kann. Die Fixierung erfolgt so, dass das eine Teil so fest eingespannt ist, dass durch die torsionale Schwingung eine Schweissverbindung erzeugbar ist. Bevorzugt wird die Masse der Formteilaufnahme derart gewählt, dass die Formteilaufnahme aufgrund ihrer Massenträgheit nicht durch die Sonotrode in Schwingungen versetzbar ist. Diese Anordnung ist besonders vorteilhaft, weil dadurch eine gute Verschweissung zwischen den beiden Formteilen erreicht werden kann.

Bevorzugt umfasst die Formteilaufnahme einen Abguss, beispielsweise aus Zweikomponenten Epoxidharz und/oder eine einstellbare, festklemmende mechanische Aufnahme, die aus Metall gefertigt sein kann. Die Formteilaufnahme hat vorzugsweise eine harte und raue Oberfläche, was die Reibung gegenüber dem Formteil erhöht, wenn dieses eingespannt ist. Denkbar sind auch andere wenig verformbare Materialien. Wichtig für den Erfolg der Schweissung ist die Eigenschaft, dass die Formteilaufnahme das Formteil fest einspannen kann, so dass es nicht in Schwingungen, ausgelöst durch die Sonotrode, versetzt werden kann. Ein Abguss ist deshalb besonders vorteilhaft, weil dadurch eine passgenaue Formteilaufnahme gebildet werden kann, in welcher das Formteil mit Nullspiel einlegbar ist.

Bevorzugt ist das Formteil derart in der Formteilaufnahme fixierbar, dass die Formteilaufnahme unmittelbar an eine Ebene einer Schweissnaht der zu verbindenden Teile grenzt oder zumindest teilweise über die Ebene der Schweissnaht ragt. Die Klemmung bzw. Fixierung des unteren Teils muss also möglichst nahe der Schweissnaht erfolgen. Sonst verliert sich der torsionale Effekt im unteren Teil und tritt nicht in der Schweissnaht auf. Diese Befestigung hat den Vorteil, dass auch weiche und/oder elastische Materialien , insbesondere alle Thermoplaste und teilweise auch Duroplaste, entlang der Schweissnaht festgeklemmt werden können, ohne dass torsionale Schwingungen auf das fixierte Teil übertragen werden.

Einem weiterer Aspekt betrifft eine Vorrichtung zum torsionalen Ultraschallschweissen zum Feinprägen und/oder Feinläppen eines Formteils, insbesondere eines hochpräzisen Spritzgussteils und ein entsprechendes Verfahren. Vorzugsweise handelt es sich um ein hochpräzises Mikro-Spritzgussteil aus Metall wie z.B. die Nadel eines Einspritzventils für Verbrennungsmotoren. Die Präzision des Spritzgusses reicht nicht aus, so dass insbesondere der Sitz und die Abdichtung der Düsennadel für ein Einspritzventil aufwändig durch Feinprägen und/oder Feinläppen nachbearbeitet werden müssen. Dazu wird die Oberfläche des zu bearbeitenden Teils mit torsionalen Schwingungen beaufschlagt, wodurch ein Umformung der Oberfläche eintritt. Die Verwendung bzw. das Verfahren haben den Vorteil, dass sich dadurch eine präzise und kostengünstige Bearbeitung der Oberfläche des empfindlichen Spritzgussteils erzielen lässt, ohne das filigrane Spritzgussteil zu beschädigen.

Weitere Einzelmerkmale und Vorteile der Erfindung ergeben sich aus der nachfolgenden Beschreibung der Ausführungsbeispiele und aus den Zeichnungen. Es zeigen:
- Figur 1: eine perspektivische Darstellung eines Teils einer Sonotrode und einer Formteilaufnahme mit einem eingespannten Formteil,
- Figur 2: eine perspektivische Ansicht eines ersten Ausführungsbeispiels einer Vorrichtung zum torsionalen Ultraschallschweissen,
- Figur 3: eine perspektivische Ansicht eines zweiten Ausführungsbeispiels einer Vorrichtung zum torsionalen Ultraschallschweissen,
- Figur 4: eine perspektivische Detailansicht eines ersten Ausführungsbeispiels einer Sonotrode,
- Figur 5: eine Aufsicht auf ein zweites Ausführungsbeispiel einer Sonotrode,
- Figur 6: einen schematischen Querschnitt durch eine Sonotrode und eine Formteilaufnahme mit zwei zu vernietenden Formteilen.

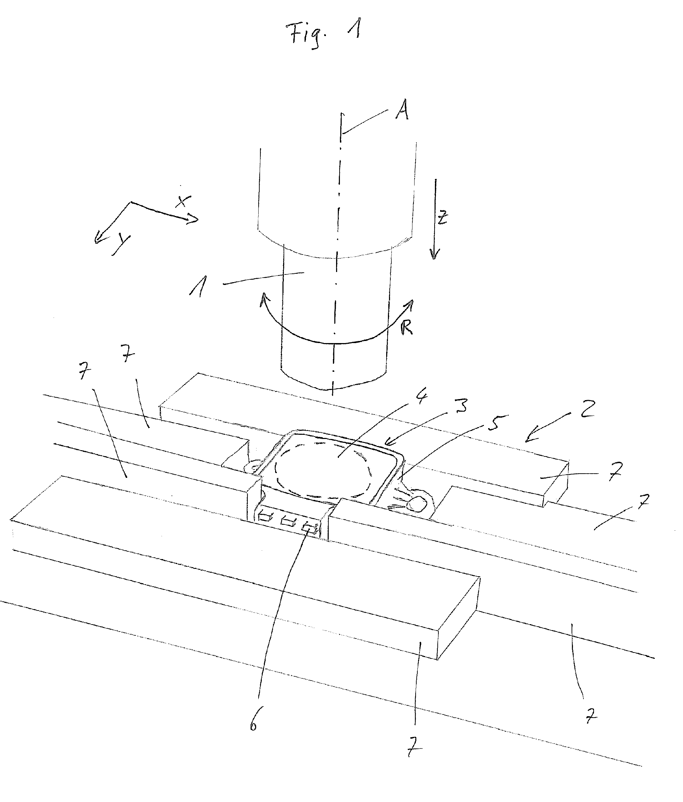

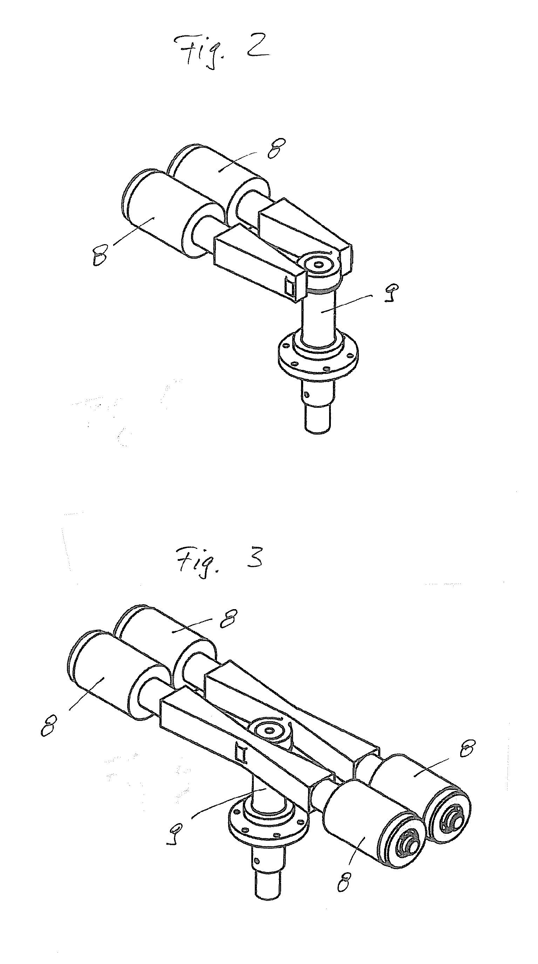

Figur 1 zeigt eine Sonotrode 1 welche über einer Formteilaufnahme 2 angeordent ist. Die Sonotrode 1 gehört zu einer beispielsweise in Fig. 2 dargestellten Vorrichtung zum torsionalen Ultraschallschweissen. Die Sonotrode 1 ist in einer Z-Richtung auf und ab bewegbar mittels einer hier nicht dargestellten Hub- und Senkvorrichtung. Solche Hub- und Senkvorrichtungen sind dem Fachmann bekannt und dienen dazu, eine Anpresskraft in Z-Richtung auf ein Formteil 3 aufzubringen. Die Sonotrode 1 ist mit torsionalen Ultraschallschwingungen beaufschlagbar, so dass die Sonotrode 1 eine torsionale Schwingung R um die Torsionsachse A ausführt.

Das Formteil 3 umfasst hier einen rechteckigen Deckel 4, welcher mit einem Gehäuse 5 eines Sensors verschweisst werden soll. Beide Teile 4,5 sind aus Polyamid. Seitlich weist das Gehäuse 5 Anschlusskontakte 6 einer Sensorelektronik auf.

Die Formteilaufnahme 2 umfasst mehrere Metallblöcke 7 welche das Gehäuse 5 fest einspannen. Dadurch ist das Gehäuse insbesondere in Z Richtung und in einer X-Y Ebene spielfrei eingespannt und das Gehäuse 5 kann insbesondere keine torsionalen Bewegungen um die Achse A ausführen. Wenn nun die Sonotrode auf den Deckel 4 abgesenkt wird, entsteht zwischen der Oberfläche der Sonotrode 1 und der Oberfläche des Deckels 4, ein lokaler Reibschluss entlang einer Linie, angedeutet durch die gestrichelte Linie, so dass sich die torsionalen Schwingungen der Sonotrode 1 auf den Deckel 4 übertragen. Damit sich die Schwingungen nicht auf das Gehäuse 5 übertragen können, sind die Metallblöcke massiv ausgebildet und untereinander bzw. mit einer Werkbank stabil verbunden, beispielsweise verschraubt. Bedingt durch die Trägheit der massigen Metallblöcke 7 wird eine Übertragung der torsionalen Schwingungen auf die Formteilaufnahme 2 bzw. auf das eingespannte Gehäuse verhindert. Das Einspannen des Gehäuses 5 wird verbessert durch die raue Oberfläche der Metallblöcke 7 auf deren dem Formteil zugewandten Innenseite. Der Deckel 4 liegt mehr oder weniger lose auf dem Gehäuse 5 auf und kann die torsionalen Schwingungen mitmachen und die Schwingungen der Sonotrode in Z Richtung auf das Gehäuse 5 übertragen.

Die in Figur 1 oberen Kanten der Metallblöcke 7 liegen teilweise bündig an der Schweissnaht zwischen Deckel 4 und Gehäuse 5. Teilweise ragen die Metallblöcke 7 auch über die Ebene der Schweissnaht hinaus. Dadurch wird gewährleistet, dass das Gehäuse 5 in der Formteilaufnahme festliegt die torsionalen Schwingungen absorbieren kann und überhaupt eine Schweissverbindungen zwischen Deckel und Gehäuse entstehen kann.

Figur 2 zeigt eine typische Vorrichtung zum torsionalen Ultraschallschweissen, wobei die Formteilaufnahme nicht dargestellt ist. Die Vorrichtung weist zwei parallel angeordnete Konverter 8 auf welche mit einem gemeinsamen Torsionsschwinger 9 verbunden sind. Alternativ kann anstelle von zwei auch nur ein einzelner Konverter 8 vorgesehen sein. Der Torsionsschwinger 9 ist mit der Sontrode 1 verbunden. Die beiden Konverter 8 werden so gesteuert, dass die Schwingungen der Konverter in wechselseitigem Takt auf den Torsionsschwinger 9 übertragen werden.

Die Figur 3 stellt eine weitere Form einer torsionalen Ultraschallschweissvorrichtung dar für die erfindungsgemässe Verwendung. Anstelle von zwei Konvertern 8 wie in Figur 2 weist die Vorrichtung vier Konverter 8 auf, welche den Torsionsschwinger 9 anregen. Dadurch weist die Vorrichtung eine erhöhte Leistung gegenüber der in Figur 2 dargestellten Vorrichtung auf.

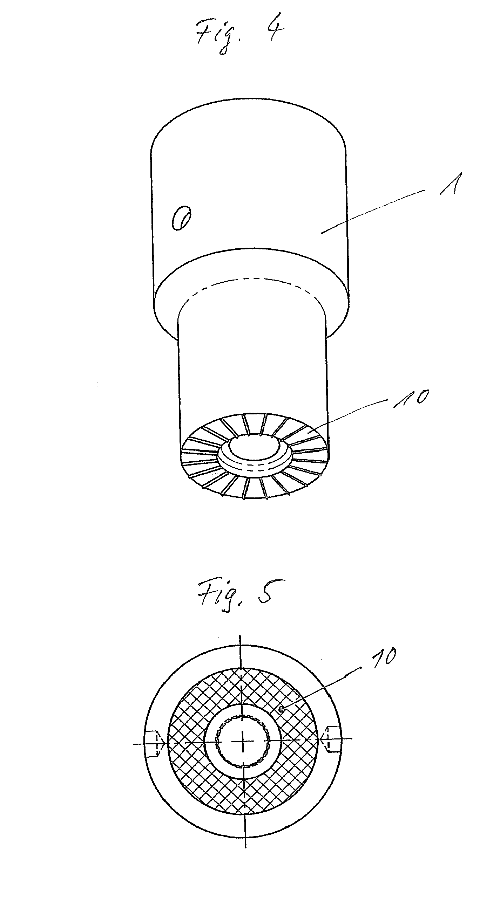

Figur 4 zeigt eine einzelne Sonotrode 1. Die auf das zu verschweissende Teil aufsetzbare Oberfläche 10 weist eine Ringscheibenform mit einer Hirthverzahnung auf. Der Durchmesser der Sonotrode beträgt hier rund 35 mm. Mit diesen Vertiefungen erhöht sich die Reibung zwischen dem Formteil und der Sonotrode.

Figur 5 zeigt eine andere Ausführung der Oberfläche 10 einer Sonotrode 1. Die Oberfläche 10 ist um 90°gekreuzt geriffelt und hat einen Flankenwinkel von 45°. Die Tiefe der Riffelung kann variieren 0.6 bis 0.25 mm. Es sind aber auch andere Flanken- und Riffelwinkel denkbar.

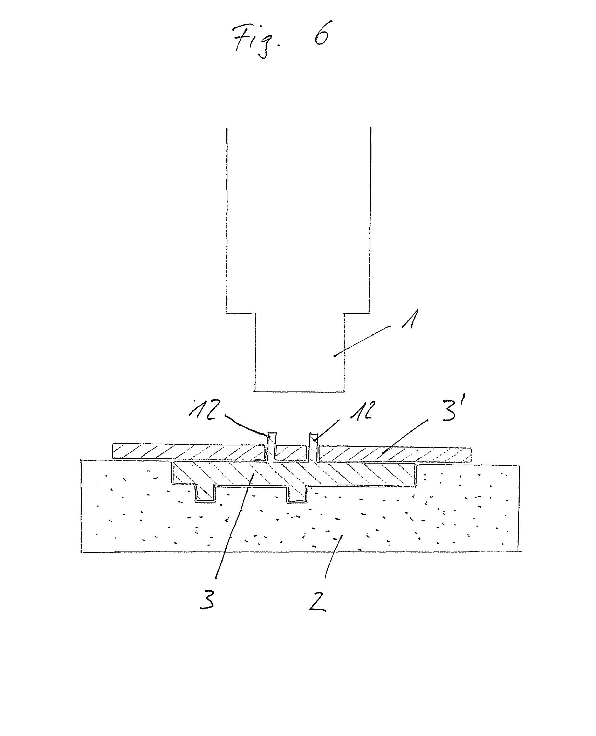

Figur 6 stellt eine schematischen Querschnitt durch eine Formteilaufnahme 2 und eine Sonotrode 1 für die Vernietung zweier Formteile 3,3` dar. Die Formteilaufnahme 2 ist hier als ausgehärtete Epoxidharz Gussmasse dargestellt, welche einen Abguss des unteren Teils des Formteils 3 bildet. Das Formteil 3 liegt mit Nullspiel in der Epoxidharzform und weist eine nicht rotationssymmetrische Form auf. Dadurch liegt das Formteil 3 um die Torsionsachse A verdrehgesichert in der Formteilaufnahme 2. Das Formteil 3 hat zwei Formteilzapfen 12 welche durch zwei Öffnungen im oberen Formteil 3' in Richtung der Sonotrode 1 ragen. Zum Vernieten wird die Sonotrode in Z-Richtung auf die Formteilzapfen 12 abgesenkt und die Formteilzapfen 12 mit torsionalen Ultraschallschwingungen beaufschlagt. Dabei wird die Sonotrode zuerst während rund 4,5 sek. mit einer Kraft von 300 Newton in Z-Richtung auf die Formteilzapfen 12 gedrückt, so dass diese plastifiziert werden. Dann wird die Kraft der Sonotrode 1 während rund 1 sek. Auf 3000 Newton erhöht. Dadurch verformen sich die Formteilzapfen und werden in die Breite gedrückt und es entsteht eine spielfreie Verbindung zwischen den beiden Formteilen 3, 3' .

## Patentansprüche

1. Verwendung einer Vorrichtung zum torsionalen Ultraschallschweissen zum Verbinden von Teilen (3,3',4,5), von denen mindestens ein Teil (3;3';4;5) ganz oder teilweise aus Kunststoff besteht.

2. Verwendung einer Vorrichtung zum torsionalen Ultraschallschweissen zum Verbinden von Teilen (3,3',4,5), insbesondere nach Anspruch 1, von denen wenigstens ein Teil (3;3';4;5) einen, insbesondere gegenüber Longitudinalstössen, stossempfindlichen Teil (3;3';4;5) als Bestandteil enthält oder wenigstens ein Teil (3;3';4;5) einem stossempfindlichen Bestandteil zugeordnet ist.

3. Verwendung einer Vorrichtung nach Anspruch 2, wobei der empfindliche Bestandteil aus der Gruppe der Bauteile elektronisches Bauteil; Gas; Fluid; feinmechanische Komponente; chemische Verbindung, insbesondere Explosionsstoffe; Substrat für Leiterbahnen; behandelte Oberfläche, bevorzugt Lacke, Metallisierung oder Beschichtung; dünnwandiges Kunststoffelement, bevorzugt eine Folie, eine Membran; Nietungen; harte und zerbrechliche Stoffe, insbesondere Glas oder Silizium ausgewählt ist.

4. Verwendung einer Vorrichtung nach einem der Ansprüche 1 bis 3, wobei die Teile (3,3',4,5) nach dem Zusammenfügen ein wenigstens teilweise geschlossenes Gehäuse (5) aus Kunststoff, bevorzugt aus Polyamid bilden.

5. Verwendung einer Vorrichtung nach Anspruche 3, wobei das elektronische Bauteil ein Sensor ist.

6. Verwendung einer Vorrichtung zum torsionalen Ultraschallschweissen nach einem der Ansprüche 1 bis 9, wobei eine nicht rotationssymmetrische Verbindung zwischen den beiden Teilen gebildet wird.

7. Verwendung einer Vorrichtung zum torsionalen Ultraschallschweissen, insbesondere nach einem der Ansprüche 1 bis 6, zum Vernieten von wenigstens zwei Teilen (3,3'), wobei mindestens ein Teil (3;3') einen Formteilzapfen (12) aufweist, welcher durch die Ultraschallschwingungen zu einem Nietkopf umgeformt wird.

8. Verwendung einer Vorrichtung zum torsionalen Ultraschallschweissen zum Ausstanzen einer Folie, insbesondere aus Kunststoff.

9. Verfahren zum Verbinden eines ersten Teils (3,4) mit wenigstens einem zweiten Teil (3',5), wobei wenigstens eines der Teile (3,3',4,5) ganz oder teilweise aus Kunststoff besteht, **dadurch gekennzeichnet, dass** das erste Teil (3,4) mit torsionalen Ultraschallschwingungen beaufschlagt wird.

10. Verfahren zum Verbinden von Teilen (3,3',4,5), insbesondere nach Anspruch 9, von denen wenigstens ein Teil (3;3';4;5) einen stossempfindliches Bestandteil enthält oder wenigstens ein Teil (3;3';4;5) einem stossempfindlichen Bestandteil zugeordnet ist, **dadurch gekennzeichnet, dass** ein Teil (3;3';4;5) mit torsionalen Ultraschallschwingungen beaufschlagt wird.

11. Verfahren nach Anspruch 10, **dadurch gekennzeichnet, dass** das Bestandteil ein Element der Gruppe elektronisches Bauteil; Gas; Fluid; feinmechanische Komponente; chemische Verbindung, insbesondere Explosionsstoffe; Substrat für Leiterbahnen; behandelte Oberfläche, bevorzugt Lacke, Metallisierung oder Beschichtung; dünnwandiges Kunststoffelement, bevorzugt eine Folie, eine Membran; Nietungen; harte und zerbrechliche Stoffe, insbesondere Glas oder Silizium ist.

12. Verfahren nach einem der Ansprüche 9 bis 11, **dadurch gekennzeichnet, dass** die Teile (4;5) nach dem Verbinden ein wenigstens teilweise geschlossenes Gehäuse (5) aus Kunststoff, insbesondere aus Polyamid bilden.

13. Verfahren nach Anspruch 11, **dadurch gekennzeichnet, dass** das elektronische Bauteil ein Sensor ist.

14. Verfahren nach einem der Ansprüche 9 bis 13, **dadurch gekennzeichnet, dass** die Teile (3,3',4,5) entlang einer nicht rotationssymmetrischen Kontur miteinander verbunden werden.

15. Verfahren zur Vernietung eines ersten Formteils (3) umfassend mindestens einen Formteilzapfen (12), insbesondere aus Kunststoff, und eines zweiten Formteils (3'), insbesondere aus Kunststoff, **dadurch gekennzeichnet, dass** der Formteilzapfen (12) derart mit torsionalen Ultraschallschwingungen beaufschlagt wird, dass eine Verformung des Formteilzapfens (12) zu einem Nietkopf entsteht und die beiden Formteile (3,3') verbunden werden.

16. Verfahren nach einem der Ansprüche 9 bis 15, **dadurch gekennzeichnet, dass** das zu verbindende Teil bzw. Formteil (3;3';4;5), welches nicht direkt mit Schwingungen beaufschlagt wird, relativ gegenüber der Bewegungsrichtung (Z) und Schwingungsrichtung (R) der Sonotrode in einer Formteilaufnahme (2) fixiert wird.

17. Vorrichtung zum Torsionsultraschallschweissen mit einem Generator, wenigstens einem Konverter (8) und einem Torsionsschwinger (9) zum Beaufschlagen einer Sonotrode mit Torsionsschwingungen und mit einer Formteilaufnahme (2) zum Einspannen eines Formteils (3,3',4,5), **dadurch gekennzeichnet, dass** die Formteilaufnahme (2) derart ausgebildet ist, dass ein Formteil (3;3';4;5) relativ zu torsionalen und longitudinalen Bewegungsrichtungen der Sonotrode (R, Z) in der Formteilaufnahme (2) derart spielfrei fixierbar ist, dass eine Schweissverbindung erzielbar ist.

18. Vorrichtung nach Anspruch 17, **dadurch gekennzeichnet, dass** die Formteilaufnahme (2) einen Abguss eines Formteils (3,5), insbesondere aus Epoxidharz und/oder eine klemmende Aufnahme, bevorzugt aus Metall, umfasst.

19. Vorrichtung nach Anspruch 17 oder 18, **dadurch gekennzeichnet, dass** das Formteil (3,5) derart in der Formteilaufnahme (2) fixierbar ist, dass die Formteilaufnahme unmittelbar an eine Ebene einer zu bildenden Schweissnaht grenzt oder mindestens teilweise über die Ebene der Schweissnaht ragt.

20. Verwendung einer Vorrichtung zum torsionalen Ultraschallschweissen zum Feinprägen und/oder Feinläppen eines Formteils (3;3';4;5), insbesondere eines hochpräzisen Spritzgussteils.

21. Verfahren zum Feinprägen und/oder Feinläppen eines Formteils (3;3';4;5), insbesondere eines hochpräzisen Spritzgussteils, **dadurch gekennzeichnet, dass** eine zu bearbeitende Oberfläche des Formteils (3;3';4;5) mit torsionalen Schwingungen beaufschlagt wird.
